# EUROPEAN PATENT APPLICATION

(11) **EP 3 974 046 A1**
(43) Date of publication of application: **30.03.2022**
(21) Application number: 20213430.0
(22) Date of filing: 11.12.2020
(51) Int. Cl.: B01D 53/02, A61L 9/00, B01D 29/62, B01D 53/04, B01J 49/00, F24F 3/16

(54) **DEVICE FOR SANITARY CLEANING OF AIR FROM TOXIC GASES**

(30) Priority: 23.09.2020 RU 2020131397
(71) Applicant: Emfil Rus LLC, Moscow 117105 (RU)
(72) Inventor: Palkhouski, Yauheni Mikhailovich, Minsk city (BY)
(74) Representative: Kolster Oy Ab

(57) **Abstract**

The patent application refers to devices for sanitary cleaning of air from toxic gases and can be used to absorb harmful impurities from the air entering an enclosed space.

The technical contribution of the patent application is to improve the quality of air filtration, which is achieved due to the fact that a device for sanitary cleaning of air from toxic gases, containing a control panel, a liquid filter, a pump, is distinguished by the fact that the liquid filter and the regenerating solution tank are combined by a circuit for circulation regeneration solution containing a circulation pump and a pH sensor, which is connected to the control panel.

## Description

### Description of the patent application

This patent application refers to devices for sanitary cleaning of air from toxic gases and can be used to absorb harmful impurities from the air entering an enclosed space. [B01D 50/00, B01D 53/86].

The existing technology known as "FILTER FOR ABSORBING CARTRIDGE" [RU 198 633 U1 publ. 20/02/2020], consists of a central perforated pipe, a filter element, and a mesh casing. It is distinguished by the fact that the filter element includes a filter material that provides effective filtration of alkaline aerosols in solid-liquid form and low aerodynamic resistance to the flow of purified air due to the increased surface area of the filter material.

The disadvantages of the analog are:
- The solution has a low quality of filtration due to the absence of control and management elements. It is impossible to constantly monitor and control the quality of filtration;

In this solution, it is not possible to select modes to provide better filtration depending on the type(s) and sources of pollution.

In addition, existing technology offers a DEVICE FOR HIGHLY EFFECTIVE AIR PURIFICATION FROM DISPERSE AND MOLECULAR IMPURITIES [RU 197 852 U1, publ. 06/02/2020], including the inlet and outlet of the air flow, a mechanical coarse filter installed at the inlet of the air flow in front of the grounded cylinder, along the axis of which a corona wire electrode for unipolar charging of aerosols is stretched, a cylindrical electrostatic filter that is located in the central part of the housing, and consist of a cylindrical high-voltage grid and a grounded gas-permeable cylindrical electrode between which a dielectric fibrous material is located, a high voltage source connected to an electrostatic filter and to a corona wire electrode, and a sorption cylindrical filter of molecular impurities from porous hoptalum granules, installed in front of the air flow outlet, characterized by the grounded gas-permeable cylindrical electrode is made in the form of a grounded cylindrical fine-porous metal membrane filter installed coaxially with the cylindrical electrostatic filter .

The disadvantages of the analog are:
- This solution has high requirements for ensuring the safety of operation. This is due to the presence of a high voltage source in the design of the device, which significantly complicates wide usage.
- In this solution, it is not possible to control operation of the device during the operation process or indicate worn-out conditions of the main functional elements, which can lead to deterioration in the quality the device's filtration process over a certain period of time.

The closest to the device in technical abilities is a DEVICE FOR CLEANING GAS [RU2575426C1, publ. 02/20/2016], containing a gas flow passage, a hydrophilic carrier permeable to a gas flow, part of which is located inside a specified gas flow passage and is configured to contain a reactant that contacts the gas in the specified gas flow passage; a block for transferring fluid to an indicated carrier; and a controller connected to the indicated transfer unit configured to; control the transfer unit to transfer the aqueous solution of the dissolved reagent to the carrier; and thereafter, controlling the transmission unit to transfer the liquid in the case where the moisture content of the gas entering the specified carrier is below the first moisture threshold, or to stop the transfer of the liquid in the case where the moisture content of the gas entering the specified media is higher than the second moisture threshold.

The main technical problem of the prototype is that this device does not provide the ability to control the degree of development of an aqueous solution of a dissolved reagent. This leads to deterioration in the quality of filtration, due to the impossibility of prompt replacement of the spent aqueous reagent solution.

The objective of the patent application is to fix the shortcoming of these prototypes.

The technical contribution of the patent application is to improve the quality of air filtration.

The specified technical contribution is achieved by a device for sanitary cleaning of air from toxic gases, containing a control panel, a liquid filter, a pump, and is distinguished by the liquid filter and the regenerating solution tank are combined by a circuit for circulation of the regenerating solution containing a circulation pump and a PH sensor, which is connected to the control panel.

In particular, the device contains a set of liquid filters arranged in series thus forming a filter block, which is located in the housing above the regeneration solution tank.

In particular, a filter for mechanical cleaning of the air entering the device is located on the front wall of the filter block housing.

In particular, a control panel is located on the side wall of the filter unit housing, in which the user interface and/or light signaling elements are located, and which is connected to the circulation pump, the valve for supplying water to the tank, plugs for venting the regeneration system, a valve on the mixing line and a pH sensor.

In particular, there are pipes for draining the solution from the housing to the regenerating solution tank and a valve for draining the spent solution into the sewer.

In particular, a branch pipe for supplying a reagent, a valve for supplying water to the tank and a hydraulic level are connected to the regeneration solution tank.

In particular, a top cover for servicing the liquid filters is located on top of the filter unit housing.

In particular, a pH sensor is connected to a pH electrode.

In particular, a plug is located in the regeneration solution tank for venting the regeneration system.

In particular, there is a hatch cover for loading the active agent on top of the regeneration solution tank.

### Brief Description of Drawings

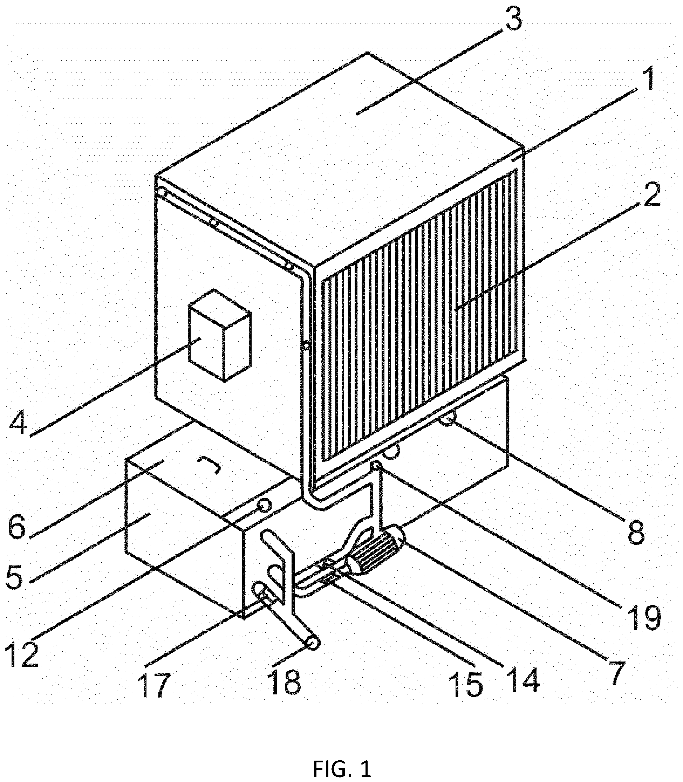

Figure 1 shows a general view of a device for sanitary cleaning for air from toxic gases

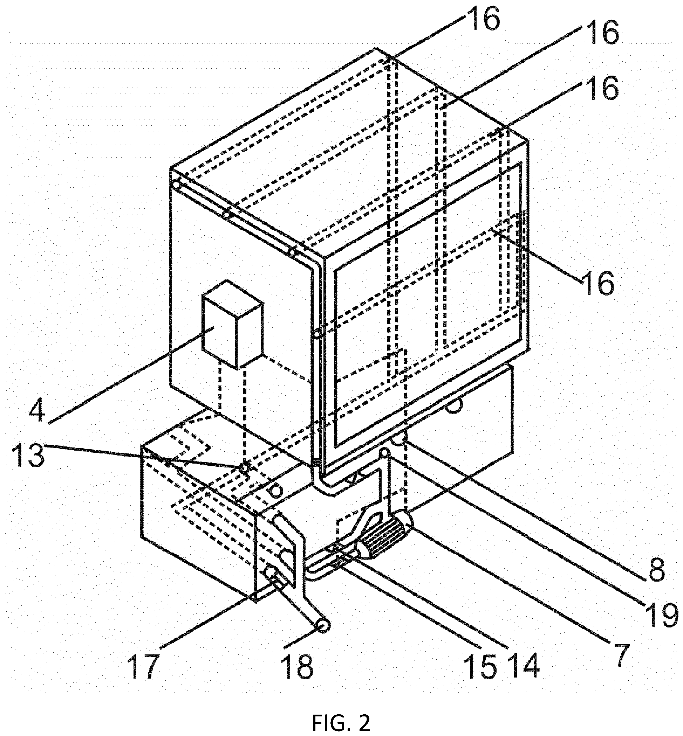

Figure 2 shows a general view of a device for sanitary cleaning of air from toxic gases with indications of the internal elements.

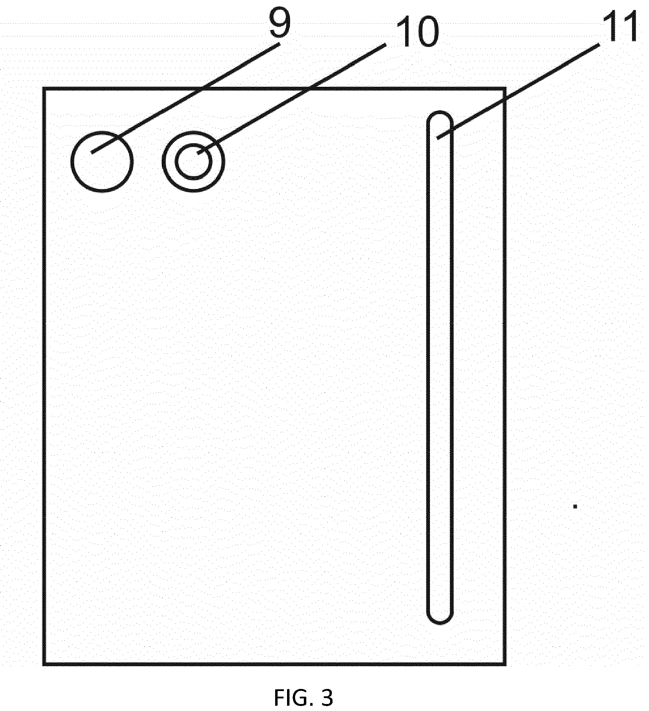

Fig. 3 shows a view of the rear wall of a tank for preparing and storing a regenerating solution.

The drawings indicate: 1 - housing, 2 - filter element for mechanical cleaning, 3 - top cover for inspection of the filter element, 4 - control panel, 5 - tank for preparation and storage of the regenerating solution, 6 - hatch cover for loading active reagent, 7 - pump, 8 - pipes for draining the solution from the housing to the tank, 9 - branch pipe for supplying the reagent, 10 - valve for supplying water to the tank, 11 - hydraulic level, 12 - pH sensor, 13 - pH electrode, 14 - tap on the solution intake line, 15 - valve on the mixing line, 16 - block of filter elements for wet cleaning, 17 - valve for draining the spent solution into the sewer, 18 - drain pipe for spent solution into the sewer, 19 - plug for venting the regeneration system.

### Enforcement of a patent application

The device for sanitary cleaning of air from toxic gases contains a housing 1. Inside the housing 1, a filter element for mechanical cleaning is mounted 2. In the upper part of the housing 1, there is an upper cover for inspecting the filter element 3, on its side wall, there is a control panel 4, which is a metal box installed on the side of the housing 1 from the side of the service area. Under the housing 1, there is a tank for the preparation and storage of the regenerating solution 5, in the upper part of which there is a hatch cover for loading the active reagent 6, on the side wall there is a pump 7, and pipes for draining the solution from the housing into the tank 8, and on the rear wall there is a branch pipe for feeding reagent 9, valve for supplying water to the tank 10 and hydraulic level 11. On the hatch cover for loading the active reagent 6, there is a pH sensor 12, which is connected to the pH electrode 13. The branch pipe for supplying the reagent 9 and the valve for supplying water to the tank 10 are connected in series with the tap on the solution intake line 14 and a valve on the mixing line 15, which is connected to the pump 7. The pump outlet 7 is connected to the valve outlet on the solution intake line 14 and the distribution system of the regenerating solution through the block of filter elements for wet cleaning 16, which is connected to the waste drain valve solution 17, which is connected to the pipe for draining the spent solution into the sewer 18. In this case, the control panel pressure 4 is connected to a pump 7, a valve for supplying water to a tank 10, a plug for venting the regeneration system 19, a valve on the mixing line 15 and a pH sensor 12, while the electrical wiring is laid in a flexible metal sleeve.

A device for sanitary cleaning of air from toxic gases is used as follows:
During the operation of the device for sanitary cleaning of air from toxic gases, polluted air passes through the filter element for mechanical cleaning 2 and the block of filter elements for wet cleaning 16, while it is cleaned due to the circulation of the regenerating solution in the distribution system of the regenerating solution through the block of filter elements for wet cleaning 16. In this case, the required pressure for the circulation of the regenerating solution is provided due to the operation of the pump 7, which receives water, through the water supply valve 10, and the reagent, through the reagent supply pipe 9. The amount of the supplied solution is displayed on the hydraulic level 11 which is located on the rear the wall of the tank for the preparation and storage of the regenerating solution 5. The operating modes of the device for sanitary cleaning of air from toxic gases are controlled through the control panel 4. Also, the control panel 4 allows air to be released from the system through the plug for venting the regeneration system 19, control the operation of the pump 7, control the valve for supplying water to the tank 10, control the valve on the mixing line 15, and control the degree of solution processing by receiving readings from the pH sensor 12.

The preparation of the regenerating solution takes place in the tank for the preparation and storage of the regenerating solution 5 by filling the tank with water through the water supply valve to the tank 10, feeding it into the reagent tank through the reagent supply pipe 9, and pausing in the operation of the device for 5 minutes to dissolve the reagent in tank volume. Regeneration and irrigation of the block of filter elements occurs by supplying the solution to the block of filter elements for wet cleaning 16, which is an ion-exchange cloth, and returning to the tank through the pipes for draining the solution from the housing to the tank 8 or into the sewage system, through the waste solution draining into the sewage system 18, in case the filter is equipped with a gravity drainage system. The process of regeneration is long, which the transition of functional groups to the active ionic form occurs. It is performed once every few days. The irrigation process is short, only the block of filter elements for wet cleaning 16 is moistened to maintain a sufficient amount of moisture in them for effective ion exchange. It is performed once an hour with duration of 2-10 minutes.

The spent regenerating solution is drained by entering the tank, through the pipes for draining the solution from the housing into the tank 8, or into the sewer, through the waste solution drain 18.

The degree of solution recovery is controlled by a pH electrode 13, the readings from which are transmitted to the pH sensor 12, while information on the degree of solution recovery is displayed on the control panel 4.

Thus, the device for sanitary cleaning of air from toxic gases allows filtering the air from toxic gases, ensuring the preparation of a regenerating solution, regenerating and irrigating a block of filter elements, draining the spent regenerating solution into the sewer or pumping it into a storage tank, and also controlling the amount of spent solution.

The technical contribution of the patent application which improves the quality of air filtration is achieved due to the fact that the pH electrode 13 is connected to a pH sensor 12 that determines the acidity value of the solution and transmits the measured value to the pH sensor 12, which, in turn, is displayed on the control panel 4. This quickly determines the amount of spent solution and, if necessary, carries out the procedures for regeneration, irrigation, or drainage of the spent solution, which in turn leads to an increase in the quality of filtration by maintaining the amount of spent solution at a level not exceeding the limit.

## Claims

1. A device for sanitary cleaning of air from toxic gases, contains a control panel, a liquid filter, a pump that is **characterized in that** the liquid filter and a regenerating solution tank are combined by a circuit for circulating a regenerating solution containing a circulation pump and a pH sensor, which is connected to the control panel.

2. The device according to claim 1, **characterized in that** it contains a set of liquid filters arranged in series and forming a filter block, which is located in the housing above the regeneration solution tank.

3. The device according to claim 2, **characterized in that** a filter is located on the front wall of the filter block housing for mechanical cleaning of the air entering the device.

4. The device according to claim 2, **characterized in that** a control panel is located on the side wall of the filter unit housing, on which the user interface and/or light signaling elements are located, and which is connected to a circulation pump, a valve for supplying water to a tank, plugs for venting the regeneration system, valve on the mixing line, and pH sensor.

5. Installation according to claim 1, **characterized in that** the pipes for draining the solution from the housing into the tank and a valve for draining the spent solution into the sewer are located in the tank body for the regenerating solution.

6. The device according to claim 1, **characterized in that** a branch pipe for supplying a reagent, a valve for supplying water to the tank and a hydraulic level are made in the tank for the regenerating solution.

7. Installation according to claim 2, **characterized in that** the top cover for servicing the liquid filters is located on top of the filter unit housing.

8. Installation according to claim 1, **characterized in that** the pH sensor is connected to the pH electrode.

9. Installation according to claim 1, **characterized in that** a plug is located in the regeneration solution tank for venting the regeneration system.

10. Installation according to claim 1, **characterized in that** a hatch cover for loading the active reagent is located on top of the regeneration solution tank.
